# NEUE EUROPÄISCHE PATENTSCHRIFT

(11) **EP 0 392 334 B2**
(45) Veröffentlichungstag und Bekanntmachung des Hinweises auf die Entscheidung über den Einspruch: **02.01.2003**
(45) Hinweis auf die Patenterteilung: 19.07.1995
(21) Anmeldenummer: 90106450.1
(22) Anmeldetag: 04.04.1990
(51) Int. Cl.: C09B 67/00

(54) **Verwendung einer Kupferphthalocyanin-Harz-Mischung zur Herstellung von pastösen Druckfarben**
Use of a copper phthalocyanine resine mixture for the manufacture of pasty printing colours.
Utilisation d'une mixture de résine et phtalocyanine de cuivre pour la fabrication d'encres d'impression pâteuses.

(30) Priorität: 08.04.1989 DE 3911476
(43) Veröffentlichungstag der Anmeldung: 17.10.1990
(73) Patentinhaber: BASF Aktiengesellschaft, 67063 Ludwigshafen (DE)
(72) Erfinder: Loebbert, Gerd, Dr., D-6717 Hessheim (DE)

(56) Entgegenhaltungen:
- EP-A- 0 069 395
- EP-A- 0 269 079
- CH-A- 361 349
- GB-A- 1 224 627
- JP-A- 6 381 168
- US-A- 2 486 351
- US-A- 4 104 277
- US-A- 4 371 642
- US-A- 4 548 968
- WPIL, FILE SUPPLIER, AN=83-37566K [16], Derwent Publications Ltd.,London, GB; &JP-A-58-40333 (Dainichiseika Color Chem.) 09-03-1983
- WPIL, FILE SUPPLIER, AN=84-053311 [09],Derwent Publications Ltd.,London, GB; &JP-A-59-12934 (Sanyo Chem. Ind. Ltd.) 23-01-1984, *Zusammenfassung*
- Ullmanns Enzyklopädie der tech. Chemie, 4. Auflage, Bd 10, Seiten 194-196

## Beschreibung

Die vorliegende Erfindung betrifft die Verwendung einer Kupferphthalocyanin-Harz-Mischung zur Herstellung von pastösen (hochviskosen) Druckfarben, wobei die Kupferphthalocyanin-Harz-Mischung durch Kugelvermahlung von rohem Kupferphthalocyanin mit einem Teil des für die Herstellung der Druckfarbe benötigten phenolmodifizierten Kolophoniumharzes erhalten wird, und zwar in einer Menge von 0,5 bis 10 Gew.-%, bezogen auf das rohe Kupferphthalocyanin, und wobei das Kupferphthalocyanin eine Primärteilchengröße von maximal 1 µm und einen Gehalt an α-Modifikation nicht höher als 60% aufweist, indem man die erhaltene Kupferphthalocyanin-Harz-Mischung mit einem Bindemittel aus dem für die Druckfarbe benötigten phenolmodifizierten Kolophoniumharz und Mineralöl und gegebenenfalls mit Zuschlagsstoffen in einer Rührwerkskugelmühle dispergiert.

Es ist bekannt, daß rohes Kupferphthalocyanin, wie es üblicherweise bei der Synthese anfällt, wegen seiner Teilchengröße von 10 - 100 µm als Pigment nicht geeignet ist.

Zur Überführung (Konditionierung) in Pigmentform wurde eine ganze Reihe von Verfahren entwickelt, beispielsweise die Kugelvermahlung oder Verknetung in Gegenwart anorganischer Salze oder die Vermahlung in Abwesenheit von Mahlhilfsstoffen in Kugelmühlen und anschließende Behandlung des erhaltenen Rohpigments mit einem organischen Lösungsmittel. Auch die Vermahlung in Gegenwart eines organischen Mediums ist möglich, sowie weiterhin das Umlösen oder Quellen des rohen Pigments mit Schwefelsäure.

In der GB-A-1 224 627 und der EP-A-69 395 wird die Vermahlung von Rohpigmenten in Gegenwart von Harzen beschrieben, jedoch werden hier wesentlich "verdünntere" Pigment-Harz-Dispersionen hergestellt, die nicht für pastöse Druckfarben geeignet sind, die Mahlung findet also in Gegenwart erheblich größerer Mengen Harz statt.

Bei dem in der CH-A-361 349 beschriebenen Verfahren wird das Rohpigment in Gegenwart eines Überschusses einer flüssigen oder halbflüssigen Phase und eines ungelösten organischen Mahlkörpers gerührt oder geknetet.

Es ist auch bekannt, daß bereits gemahlene feinteilige, in der Kristallisation gestorte und stark agglomerisierte rohe Kupferphthalocyanin-Pigmente direkt in Druck- und Lackfarben eingearbeitet werden können. Dies gelingt insbesondere bei flüssigen, aromatenhaltigen Tiefdruckfarben sehr gut. Das durch Kugelvermahlung erhaltene Rohpigment hat in der Regel einen Alpha-Gehalt von 10 bis 60 %, der sich bei der Anreibung, z.B. in einem Toluol/Harz-System, sehr schnell und vollständig in eine kristalline Beta-Form umwandelt.

Im Gegensatz dazu verläuft dieser Vorgang in pastösen Druckfarben nicht befriedigend. Die Benetzung erfolgt sehr viel schwieriger, und dementsprechend ist die Umwandlung in die Beta-Modifikation sehr langsam. Man kann diese Vorgänge zwar durch Temperaturerhöhung beschleunigen, jedoch erzielt man unter den üblichen Bedingungen keine ausreichende Feinverteilung des Pigments, und es müssen zusätzliche Rührwerksmühlenpassagen durchgeführt werden.

Es wurde nun überraschenderweise gefunden, daß man für pastöse Druckfarben geeignete Kupferphthalocyanine erhält, wenn erfindungsgemäß ein Teil des bei der Druckfarbenherstellung benötigten Harzes bereits bei der Kugelvermahlung zugesetzt wird. Überraschend ist hierbei insbesondere, daß die erwartete Verklebung der Pigmentagglomerate ausbleibt und daß das Gemisch auch nicht an der Wandlung der Kugelmühle anbackt. Das erfindungsgemäß so erhaltene Rohpigment läßt sich leicht im Mineralöl/Bindemittel-System verteilen. Glanz und Farbstärke daraus hergestellter Drucke sind besonders gut, und auch Scheuerfestigkeit und Nagelhärte werden deutlich verbessert.

Die erfindungsgemäß erhaltenen Rohpigmente liegen als feine, stark agglomerierte und im Kristallaufbau gestörte Teilchen mit einer Primärteilchengröße von maximal 1 µm vor. Der Gehalt an Alpha-Modifikation darf nicht höher als 60 % liegen, vorteilhaft sind Gehalte von 20 - 40 %.

Geeignete Harze sind die aus dem Stand der Technik bekannten phenolmodifizierten Kolophoniumharze.

Erfindungsgemäß verwendet man eine Kupferphthalocyanin-Harz-Mischung, die man erhält, indem man das Roh-Kupferphthalocyanin in einer Kugel- oder Schwingmühle in Gegenwart von 0,5 bis 10 Gew.-%, bezogen auf das Roh-Kupferphthalocyanin, phenolmodifiziertem Kolophoniumharz 5 bis 50 Stunden vermahlt, wobei auch schon andere Zuschlagstoffe zugesetzt werden können.

Das so erhaltene Rohpigment kann dann beispielsweise in einem Rührkessel oder Dissolver in eine Mischung von Bindemittel, Lösungsmittel und gegebenenfalls Zuschlagstoffen eingetragen und anschließend mit Hilfe einer Rührwerkskugelmühle dispergiert werden. Man erhält dabei eine Druckfarbe mit den geschilderten hervorragenden Eigenschaften.

### Beispiel 1

In einem 0,75 l Mahlbehälter, gefüllt mit 1,5 kg Stahlkugeln mit einem Durchmesser von 2,5 cm, werden 72,75 g Rohkupferphthalocyanin und 2,25 g eines phenolmodifizierten Kolophoniumharzes bei 100°C 20 Stunden lang auf einer Schwingmühle vermahlen. Man erhält ein Pigmentgemisch mit einem Gehalt von 21 % Alpha-Modifikation.

Zur Überführung in eine Druckfarbe wird eine Mischung von

| | |
|---|---|
| 15 g | des so erhaltenen Pigmentgemisches, |
| 60 g | Bindemittel, |
| 6 g | beschichtetem Calciumcarbonat, |
| 5 g | Dibutylphthalat, |
| 4 g | Antioxidationsmittel und |
| 2 g | PTFE/PE-Wachs |

30 Minuten im Dissolver bei 60 bis 80°C und 3000 Upm gerührt und anschließend bei 105 bis 115°C zweimal über eine Rührwerksmühle gefahren. Anschließend wird auf einem Dreiwalzwerk bei 40°C entlüftet.

Man erhält eine Druckpaste mit hervorragenden Druckeigenschaften. Glanz und Farbstärke daraus hergestellter Drucke sind gegenüber solchen aus handelsüblichen Pigmenten und Mahlprodukten, die ohne Harzzusatz gemahlen wurden, deutlich verbessert. Scheuerfestigkeit und Nagelhärte sind ausgezeichnet.

Zur Herstellung des Bindemittels werden 43 g des oben genannten Harzes in 57 g Mineralöl mit einem Siedebereich von 230 bis 290°C eingetragen und 2 Stunden bei 180°C gerührt.

## Patentansprüche

1. Verwendung einer Kupferphthalocyanin-Harz-Mischung zur Herstellung von pastösen (hochviskosen) Druckfarben, wobei die Kupferphthalocyanin-Harz-Mischung durch Kugelvermahlung von rohem Kupferphthalocyanin mit einem Teil des für die Herstellung der Druckfarbe benötigten phenolmodifizierten Kolophoniumharzes erhalten wird, und zwar in einer Menge von 0,5 bis 10 Gew.-%, bezogen auf das rohe Kupferphthalocyanin, und wobei das Kupferphthalocyanin eine Primärteilchengröße von maximal 1 µm und einen Gehalt an α-Modifikation nicht höher als 60% aufweist, indem man die erhaltene Kupferphthalocyanin-Harz-Mischung mit einem Bindemittel aus dem für die Druckfarbe benötigten phenolmodifizierten Kolophoniumharz und Mineralöl und gegebenenfalls mit Zuschlagsstoffen in einer Rührwerkskugelmühle dispergiert.

## Claims

1. Use of a copper phthalocyanine-resin mixture for preparing pasty (highly viscous) printing inks, the copper phthalocyanine-resin mixture being obtained by ball milling crude copper phthalocyanine with a portion of the phenol-modified rosin needed for preparing the printing ink, specifically in an amount of from 0.5 to 10% by weight, based on the crude copper phthalocyanine, and the copper phthalocyanine having a primary particle size of not more than 1 µm and an α-phase content of not more than 60%, by dispersing the resulting copper phthalocyanine-resin mixture with a binder composed of the phenol-modified rosin needed for the printing ink and mineral oil and optionally with aggregates in a stirred media mill.

## Revendications

1. Emploi d'un mélange de phtalocyanine de cuivre et de résine, en vue de la fabrication d'encres d'imprimerie pâteuses (très visqueuses), **caractérisé en ce que** l'on obtient le mélange de phtalocyanine de cuivre et de résine en broyant, à l'aide d'un broyeur à boulets, la phtalocyanine de cuivre brute avec une partie de la résine de colophane modifiée par un phénol nécessaire à la production de l'encre d'imprimerie, en quantité allant de 0,5% à 10 % en poids, par rapport à la phtalocyanine de cuivre brute, et la phtalocyanine de cuivre présentant une taille maximale des particules primaires de 1 µm, et une teneur en modification alpha ne dépassant pas 60%, puis en dispersant le mélange de phtalocyanine de cuivre et de résine obtenu, avec un liant obtenu à partir de la résine de colophane modifiée par un phénol nécessaire à la production de l'encre d'imprimerie, de l'huile minérale, et, éventuellement, des compléments, dans un broyeur-agitateur à boulets.
